# EUROPEAN PATENT APPLICATION

(11) **EP 2 034 788 A1**
(43) Date of publication of application: **11.03.2009**
(21) Application number: 07015023.0
(22) Date of filing: 31.07.2007
(51) Int. Cl.: H04W 64/00

(54) **Decentral determination of the velocity of a user equipment in a cellular telecommunication network**

(71) Applicant: Nokia Siemens Networks Oy, 02610 Espoo (FI)
(72) Inventor: Goerge, Jürgen, Dr., 82061 Neuried (DE)
(74) Representative: Bruglachner, Thomas E.

(57) **Abstract**

It is described a method for determining the velocity of a User Equipment (111) within a cellular telecommunication network (100 comprising a first base station (101) being assigned to a first cell and a second base station (102) being assigned to a second cell. The described method comprises establishing a first connection (111a) between the User Equipment (111) and the first base station (101), acquiring a first time information about the first connection (111a), adding the first time information to a data record, establishing a second connection (111b) between the User Equipment (111) and the second base station (102), transferring (125) the data record from the first cell to the second cell, acquiring a second time information about the second connection (111b), adding the second time information to the data record, and determining the velocity of the User Equipment (111) based on the first and the second time information. Preferably, the first and the second time information represent a handover of the User Equipment (111) between different cells of the cellular telecommunication network (100).

## Description

### Field of invention

The present invention relates to the field of cellular telecommunication networks. In particular, the present invention relates to a method for determining the velocity of a User Equipment within a cellular telecommunication network such as a fourth generation Long Term Evolution network. Further, the present invention relates to a base station and a User Equipment, which are designed in such a manner, that the described velocity determining method can be carried out.

### Art Background

Long Term Evolution (LTE) is the name given to a project within the Third Generation Partnership Project (3GPP) to improve the Universal Mobile Telecommunications System (UMTS) mobile phone standard to cope with future requirements. Goals include improving efficiency, lowering costs, improving services, making use of new spectrum opportunities, and better integration with other open standards. The LTE project is not a standard, but it will result in a new evolved release of the UMTS standard, including mostly or wholly extensions and modifications of the UMTS system.

LTE networks rely on Orthogonal Frequency Division Multiplexing (OFDM) as well as on Multiple-Input Multiple-Output (MIMO) antenna technologies. Based on these technologies it should be possible for cellular phone network providers to handle much more users (approximately ten time more users than UMTS) and to support not only speech data but also services such as interactive applications including high speed data transfer and Internet Protocol Television (IPTV).

The architecture of LTE networks is characterized by the fact that no central base station controller manages the handovers of a cellular mobile phone between cells being assigned to different base stations. A base station in a LTE network is called evolution NodeB (eNodeB). With a LTE cellular network the eNodeB potentially in conjugation with the cellular mobile phone decides to handover a call to a cell of another eNodeB. In the following a cellular mobile phone will also be called a User Equipment (UE).

Since the decision of the individual eNodeB for initiating a handover is based on data, which are acquired on the scope of the individual eNodeB, the individual eNodeB is not able to detect, whether the UE is travelling from cell to cell with only short resident times in each cell. Thereby, the term scope of the individual eNodeB refers both to the spatial respectively the geographical scope and to the temporal scope of the eNodeB.

In connection with Global System for Mobile telecommunications (GSM) it is known to determine the velocity of a UE by means of monitoring the so called Timing Advance (TA) for the UE. The TA value corresponds to the length of time a signal from the UE takes to reach the base station. Since GSM uses Time Division Multiplex Access (TDMA) in the radio interface to share a single frequency between several UE, sequential time slots are assigned to the individual UE. Thereby, typically each UE transmits periodically for less than one-eighth of the time within one of the eight timeslots. Since the UE are located at various distances from the base station and radio waves travel at the finite speed of light, the precise time at which the phone is allowed to transmit a burst of traffic within a timeslot must be adjusted accordingly. The TA value is the variable controlling this adjustment.

In GSM telecommunication networks it is further known that in case a base station controller recognizes that a certain UE moves from cell to cell very often, the corresponding base station can handover the UE into an overlaying macro cell spatially covering several cells in order to minimize the overall number of handovers. Thereby, the data traffic needed for signaling can be minimized.

There may be a need for providing a method for determining the velocity of a UE within a cellular telecommunication network, wherein the velocity determination can be carried out in the absence of central base station controllers.

### Summary of the Invention

This need may be met by the subject matter according to the independent claims. Advantageous embodiments of the present invention are described by the dependent claims.

According to a first aspect of the invention there is provided a Method for determining the velocity of a User Equipment (UE) within a cellular telecommunication network, which comprises a first base station being assigned to a first cell and a second base station being assigned to a second cell. The provided method comprises (a) establishing a first connection between the User Equipment and the first base station, (b) acquiring a first time information about the first connection and (c) adding the first time information to a data record. The provided method further comprises (d) establishing a second connection between the User Equipment and the second base station, (e) transferring the data record from the first cell to the second cell, (f) acquiring a second time information about the second connection and (g) adding the second time information to the data record. Further, the provided velocity determining method comprises (h) determining the velocity of the User Equipment based on the first and the second time information.

The described velocity determining method is based on the idea that the velocity of a UE can also be determined by means of a decentral transfer of time information, which time information is related to the existence of various connections between the UE on the one hand and various base stations of the telecommunication network. This means that the data record is stored within any device being located within the first cell when the UE is currently connected to the first base station respectively when the UE is currently located within the first cell. Correspondingly, the data record is stored within any device being located within the second cell when the UE is currently connected to the second base station respectively when the UE is currently located within the second cell.

The first and the second time information can be interpreted as a kind of time stamps, which are added to the data record, and which are indicative for a handover of the User Equipment into or out from the corresponding cell of the cellular network.

The described method may provide the advantage that the velocity determination can also be carried out in the absence of central network components such as a central base station controller. This means that the described method can be carried out within different telecommunication networks. In particular the described velocity determining method can be accomplished within a future generation LTE telecommunication network, which comprises a system architecture without any central base station controllers managing handovers of a UE between cells being assigned to different base stations.

It has to be mentioned that here and in the following description of the invention the term "cell" and the term "base station" are used as synonyms for the same concept. However, in case if one base station serves more than one cell, a new time information may be acquired always when a handover of the UE between different cells is carried out. If the UE is then handed over to a next serving base station, the thereby updated data record either has to be transferred to the next serving base station or has to be transferred within a memory of the UE, such that the various time informations can be evaluated for obtaining the velocity of the UE.

According to an embodiment of the invention the first and the second time information represent a handover of the User Equipment between different cells of the cellular telecommunication network. Thereby, the time information can represent the time when the User Equipment enters a cell or when the User equipment leaves a cell. Furthermore, the time information can represent an intermediate time in between the time of entering and the time of leaving a cell.

From the data record a base station can determine the number of handovers per time unit of the corresponding User Equipment. The number of handovers per time unit defines a generalized velocity of the User Equipment with respect to the cellular telecommunication network.

According to a further embodiment of the invention the data record is a history file. This may provide the advantage that the time information can be stored in a simple and effective way for instance by simply writing a log file comprising the time stamps of all handovers of the User Equipment.

It has to be mentioned that of course the history file will become larger and larger if the User Equipment is moved extensively between different cells. Since for determining the effective respectively the current velocity only the recent time stamps are necessary, older time stamps can be removed from the history file. Thereby, it can be prevented that the history file will become too large. This may provide the advantage that the described velocity monitoring method can be realized without significantly increasing the data load of the involved base stations.

According to a further embodiment of the invention the data record is attached to a dataset representing characteristic information about the connection between the User Equipment and the corresponding base station.

The characteristic information may by a part of a context representing information about the radio link between the UE and the corresponding base station. This information may include for instance the radio frequency, the polarization of the radio waves extending between the UE and the base station, an identification of the UE, an identification of the corresponding base station, information about the currently employed encryption etc.

According to a further embodiment of the invention the step of transferring the data record from the first cell to the second cell comprises forwarding the data record from the first base station to the second base station. In case of a cellular LTE telecommunication network the data record respectively the history of handovers is passed from one eNodeB to another eNodeB.

It has to be mentioned that in case several different UE are logged in the telecommunication network, for each UE an individual data record may be used, which is transferred between the different base stations. Thereby, for each UE a generalized velocity can be determined simply be evaluating the various time stamps, which have been recorded during respectively at the previous handovers.

According to a further embodiment of the invention the data record is transferred via an X2 interface. This may provide the advantage that in case the above described method is carried out within an LTE network, a standardized interface between eNodeBs, which interface already exists, can be employed. This means that the described velocity determining method can be realized in known telecommunication networks without having the need to modify the corresponding network architecture. Of course, in case an X2 interface is used, the structure of the data record must comply with the standardized X2 requirements.

According to a further embodiment of the invention the data record is stored on the User Equipment. This means that the UE comprises a memory wherein a list of time stamps representing the time information of at least some of the previous handovers is stored. In order to detect the generalized velocity of the User Equipment the list of time stamps can be evaluated by the User Equipment itself and/or by the base station the User Equipment is currently assigned to. In the latter case it is of course necessary that the corresponding data record has to be transmitted to the corresponding base station.

According to a further embodiment of the invention the method further comprises controlling a handover of the User Equipment depending at least on the first and the second time information. This may provide the advantage that velocity-dependent handovers can be accomplished. This means that for carrying out a handover not only the current conditions of the radio connection between the User Equipment and the involved base stations of the cellular telecommunication network are taken into account. Based on the determined generalized velocity of the User Equipment an expectation of the following movement of the UE can be derived. Therefore, such an expectation of the UE movement can be taken into account for deciding which target base station takes over the radio connection of the UE to the network from the present serving base station.

It has to be mentioned that in case the data record of the time stamps is managed and evaluated by the UE, the UE must indicate the serving base station that it might be advantageous to handover the UE to another target base station.

According to a further embodiment of the invention, if the velocity of the User Equipment is higher than a predetermined threshold velocity, a third connection between the UE and third base station is established. Thereby, the third base station is assigned to an overlaying macro-cell.

This means that when the expected mean resident time of the UE within a certain cell of the telecommunication network is lower than a given threshold value, the base station and/or the UE can enforce a handover of the UE into an overlaying macro cell. In this respect the term overlaying "macro-cell" refers to a cell covering a bigger geographical region than a usual cell. In case of a high expected generalized velocity of the UE the described handing over the UE to such a macro cell may provide the advantage that in total fewer handovers are necessary for this fast moving UE. Therefore, the data traffic for signalling within the cellular network and, in case the described method is carried out within a LTE network, the data traffic between the eNodeBs can be reduced significantly.

According to a further embodiment of the invention the method further comprises (a) collecting a plurality of history files in a management system of the cellular telecommunication network and (b) evaluating statistical data representing a temporal assignment of at least one User Equipment to the first and/or the second base station.

The management system may be for instance an Operation and Maintenance Center of the cellular telecommunication network. The statistical data may represent the handover behaviour of a plurality of different UE. This handover behaviour can be used for optimizing the logical connection and relations between the various network elements and/or the spatial assignment of certain geographical regions to the various network elements. This means that the whole topology of the cellular telecommunication network can be optimized by evaluating the plurality of history files.

According to a further aspect of the invention there is provided a Base station for a cellular telecommunication network. The provided base station comprises a processor unit, which in connection with at least another base station and a User Equipment is adapted in such a manner, that the above described velocity determining method can be carried out.

Although the described base station may be used for different types of cellular networks, the base station may be in particular a so called eNodeB for a cellular LTE telecommunication network.

According to a further aspect of the invention there is provided a User Equipment for a cellular telecommunication network. The provided User Equipment comprises a processor unit, which in connection with at least two base stations of the telecommunication network is adapted in such a manner, that the above described velocity determining method can be carried out.

The User Equipment may be any type of communication terminal such as a cellular mobile phone, a Personal Digital Assistant (PDA), a Notebook computer and/or any other movable communication device.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figures 1a to 1e illustrate a handover of a UE within a LTE telecommunication network, wherein time information about the UE entering a new target cell is transferred in a decentral way between the eNodeBs being involved in the handover.
Figure 2 shows a LTE telecommunication network, which comprises an Operation and Maintenance Center for collecting and evaluating statistical data representing a temporal assignment of User Equipments to the various base stations.

### Detailed Description

The illustration in the drawing is schematically. It is noted that in different Figures, similar or identical elements are provided with the same reference signs or with reference signs, which differ from each other only within the first digit.

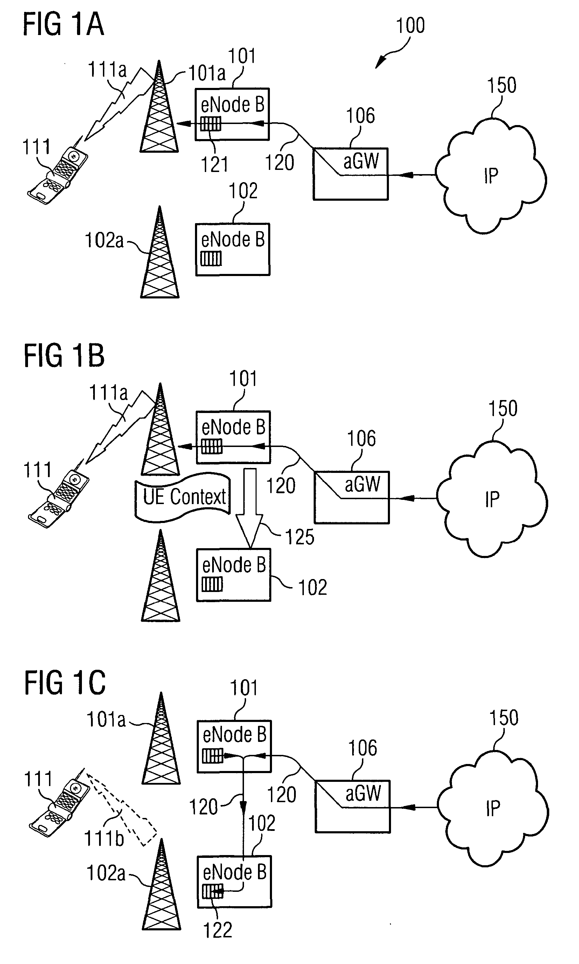

Figures 1a to 1e illustrate a handover of a User Equipment (UE) 111 within a LTE telecommunication network 100. According to the embodiment described here the UE is a mobile terminal respectively a cellular phone.

As can be seen from Figure 1a, initially in UE 111 is connected to a first base station 101. In a LTE network the first base station is called a first eNodeB 101. The first base station 101 comprises a first antenna 101a, which allows for both transmitting and receiving data between the UE 111 and the first base station 101 via a first transmission path 111a. A second base station respectively a second eNodeB 102, which comprises a second antenna 102a, is currently not involved in the communication between the UE 111 and a not depicted further UE.

In order to provide for a stable and reliable first connection 111a, characteristic information 121 about the first connection 111a is stored and maintained in the first base station 101. The characteristic information 121 represents information about the radio link between the UE 111 and the base station 101. This information may include for instance the radio frequency, the polarization of the radio waves extending between the UE 111 and the base station 101, an identification of the UE 111, an identification of the corresponding base station 101, information about the currently employed encryption etc.

According to the embodiment described here, the characteristic information 121 also includes a time information about the first connection 111a. According to the embodiment described here, this time information represents the time when the UE 111 has entered the cell being assigned to the first base station 101. Alternatively, this time information can also be generated when a handover of the UE 111 is initiated, i.e. when the UE leaves the cell.

User data 120 between the UE 111 and a further not depicted UE are transferred via an access Gateway (aGW) 106 and via an IP based network 150. All base stations of the LTE network 100 are coupled with each other via the IP based network 150 by means of appropriate access Gateways.

It has to be mentioned that the invention is not limited to a telecommunication network, which interacts with an IP based network. The invention can rather be realized by means of any other network.

Figure 1b illustrates the beginning of a handover of the UE 111 from the first base station 101 to the second base station 102, whereby a second connection respectively a second transmission path 111b between the UE 111 and the second base station 102 is established. In the beginning of the handover procedure at least a data record comprising time information about the first connection 111a is transferred to the second base station 102 representing the new target base station. This transfer of the data record is denoted with the arrow 125. According to the embodiment described here, the data record is attached to the characteristic information 121 representing a context about the UE 111.

Figure 1c illustrates an intermediate state of the handover. In this state, which typically exists only for a short time after the second transmission path 111b has been established, user data from the IP based network are transferred to the UE 111 via both base stations 101 and 102. According to the embodiment described here, the two base stations 101 and 102 are directly connected with each other by means of a standardized X2-interface.

In order to provide for a stable and reliable second connection 112a, characteristic information 122 about the second connection 111b is stored and maintained in the second base station 102. The characteristic information 122 represents the same kind of information as the characteristic information 121 about the first connection 111a described above.

In addition to the time information being related to the first connection 111a the characteristic information 122 also comprises a time information about the second connection 111b. Specifically, the time information about the second connection 111b is the time, when the second connection 111b has been established.

By evaluating these two time information indicating when the first connection 111a and the second connection 111b have been established, the second base station 102 can determine a generalized velocity of the UE 111. Thereby, the evaluation is based on the fact that the faster the UE 111 is moving, the shorter are the residence times of the UE 111 within the cells of the cellular network 100. Since the geographical sizes of each cell is known, the velocity of the UE 111 can be easily calculated.

By repeating the described transfer of time information for further handovers, the LTE network 100 can collect and maintain a time history of handovers. Thereby, each base station receives a list of time stamps, which list is indicating when the corresponding UE has entered the previous cells. When the UE leaves a cell, this old serving cell passes the corresponding list towards the new target cell. In turn the target cell adds a further time stamp indicating the time when the UE has entered the new target cell. As the UE again leaves the now serving cell, the serving cell passes the list towards the next target cell, which also adds a further time stamp and so on.

It has to be mentioned that of course the history of time stamps can be collected individually for each UE 111 being connected to the network 100. Thereby, velocity of each UE within the LTE network 100 can be determined independently.

The above described collecting and maintaining of a handover context can be carried out by means of the involved base stations and/or by means of the UE itself. Anyway, the described handover context comprising a plurality of time stamps, wherein each time stamp represents a time information when the UE has entered a specific cell, may allow for an optimization of the usage of the cells. For instance if the network is aware that a given UE is travelling at a high generalized velocity, the network can decide to handover the UE into an overlying macro cell in order to minimize the signalling traffic.

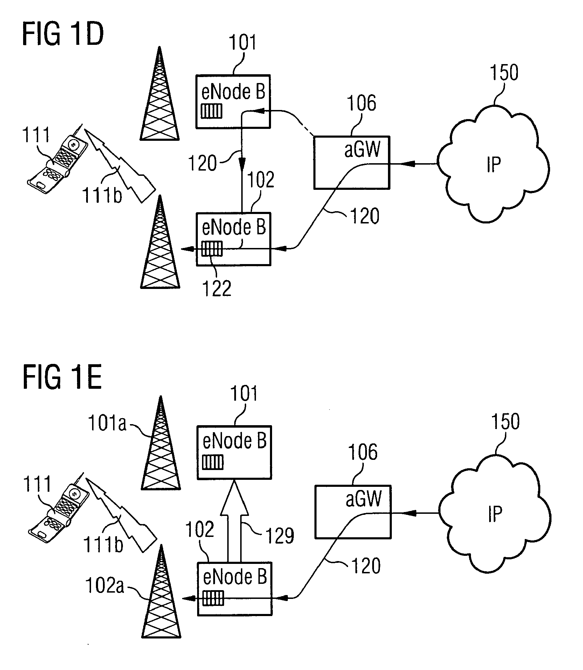

Figure 1d illustrates the situation being present at the end of the handover of the UE 111 from the first base station 101 to the second base station 102. Thereby, the second connection 111b is already fully in operation. However, there are still some user data 120, which have to be transferred to the UE 111 and which have been generated before establishing the second connection 111b. Therefore, these user data have been transmitted from the IP based network 150 towards the first base station 101. However, after these data have been fully transferred to the UE 111 this logical connection path is closed. In Figure 1d this closure of the connection path is indicated by the dashed line between the access Gateway 106 and the first base station 101.

Figure 1e illustrates last step pf the handover procedure. The base stations 101 and 102 are decoupled from each other. The corresponding decoupling is indicated by the arrow 129. In this situation the user data 120 to and from the UE 111 are transferred exclusively via the second base station 102, the access Gateway (aGW) 106 and the IP based network 150.

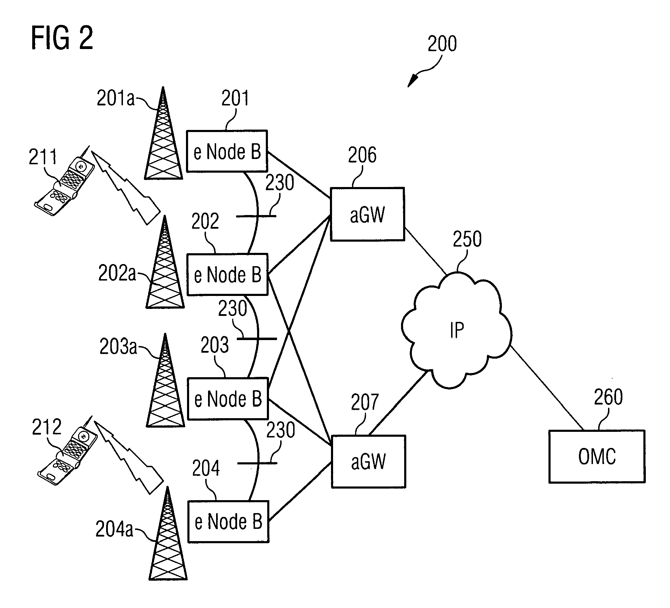

Figure 2 shows a LTE telecommunication network 200, which comprises a management system 260 for managing a plurality of base stations of the network 200. In the following the management system will be referred to as an Operation and Maintenance Center (OMC) 260.

The network 200 comprises four base stations 201, 202, 203 and 204. The first base station 201 comprises a first antenna 201a. Correspondingly, the second base station 202 comprises a second antenna 202a, the third base station 203 comprises a third antenna 203a and the fourth base station 204 comprises a fourth antenna 204a. Respectively two base stations 201 and 202, 202 and 203 and 203 and 204 are coupled with each other via a standardized X2 interface 230. Further, there are provided two access Gateways 206, 207, wherein each of the access Gateways 206, 207 is connected to (a) an IP based network 250 and (b) to a selection of the base stations 201, 202, 203 and 204.

The OMC 260, which is connected to the IP based network 250, is adapted and used for collecting and evaluating statistical data representing a temporal assignment of User Equipments 211, 212 to various cells of the base stations 201, 202, 203 and 204. Thereby, a post processing of various stored historic handover contexts are used for optimizing the topology of the network for instance by optimizing the configuration of neighbour cell relations and to optimize the assignment of base stations to the access Gateways.

For instance, if such a statistical evaluation reveals that the residence time of almost all UE within a specific cell being located in between a first cell and a second cell is very short, it can be advantageous to skip this cell and directly handover the UE from the first cell to the second cell. Thereby, the total number of handovers within the cellular telecommunication network and, as a consequence also the signalling data traffic can be reduced.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs:

- 100: LTE telecommunication network
- 101: first base station / first eNodeB
- 101a: first antenna
- 102: second base station / second eNodeB
- 102a: second antenna
- 106: access Gateway
- 111: User Equipment / mobile phone
- 111a: first connection / first transmission path
- 111b: second connection / second transmission path
- 120: user data
- 121: characteristic information / UE context
- 122: characteristic information / UE context
- 125: transfer of data record / transfer of UE context
- 129: decoupling base stations with respect to UE 111
- 150: IP based network

- 200: LTE telecommunication network
- 201: first base station / first eNodeB
- 201a: first antenna
- 202: second base station / second eNodeB
- 202a: second antenna
- 203: third base station / third eNodeB
- 203a: third antenna
- 204: fourth base station / fourth eNodeB
- 204a: fourth antenna
- 206: access Gateway
- 207: access Gateway
- 211: User Equipment / mobile phone
- 212: User Equipment / mobile phone
- 230: X2 Interface
- 250: IP based network
- 260: Management System / Operation and Maintenance Center

## Claims

1. Method for determining the velocity of a User Equipment (111) within a cellular telecommunication network (100) comprising a first base station (101) being assigned to a first cell and a second base station (102) being assigned to a second cell, the method comprising establishing a first connection (111a) between the User Equipment (111) and the first base station (101), acquiring a first time information about the first connection (111a), adding the first time information to a data record, establishing a second connection (111b) between the User Equipment (111) and the second base station (102), transferring (125) the data record from the first cell to the second cell, acquiring a second time information about the second connection (111b), adding the second time information to the data record, and determining the velocity of the User Equipment (111) based on the first and the second time information.

2. The method according to claim 1, wherein the first and the second time information represent a handover of the User Equipment (111) between different cells of the cellular telecommunication network (100).

3. The method according to any one of the previous claims, wherein the data record is a history file.

4. The method according to any one of the previous claims, wherein the data record is attached to a dataset representing characteristic information (121, 122) about the connection between the User Equipment (111) and the corresponding base station (101, 102).

5. The method according to any one of the previous claims, wherein transferring the data record from the first cell to the second cell comprises forwarding the data record from the first base station (101) to the second base station (102).

6. The method according to claim 5, wherein the data record is transferred via an X2 interface (230).

7. The method according to any one of the claims 1 to 4, wherein the data record is stored on the User Equipment (111).

8. The method according to any one of the previous claims, further comprising controlling a handover of the User Equipment (111) depending at least on the first and the second time information.

9. The method according to claim 8, wherein if the velocity of the User Equipment (111) is higher than a predetermined threshold velocity, a third connection between the UE and third base station is established, whereby the third base station is assigned to an overlaying macro-cell.

10. The method according to any one of the previous claims, further comprising collecting a plurality of history files in a management system of the cellular telecommunication network (200) and evaluating statistical data representing a temporal assignment of at least one User Equipment (211, 212) to the first base station (201) and/or the second base station (202).

11. Base station (102) for a cellular telecommunication network (100), the base station (102) comprising a processor unit, which in connection with at least another base station (101) and a User Equipment (111) is adapted in such a manner, that the method as set forth in any one of the claims 1 to 10 can be carried out.

12. User Equipment (111) for a cellular telecommunication network (100), the User Equipment (111) comprising, a processor unit, which in connection with at least two base stations (101, 102) of the telecommunication network (100) is adapted in such a manner, that the method as set forth in any one of the claims 1 to 10 can be carried out.
